# EUROPÄISCHE PATENTANMELDUNG

(11) **EP 1 209 345 A1**
(43) Veröffentlichungstag der Anmeldung: **29.05.2002**
(21) Anmeldenummer: 01124639.4
(22) Anmeldetag: 16.10.2001
(51) Int. Cl.: F02M 25/03, F02M 25/07, F02M 37/22

(54) **Brennkraftmaschinensystem**

(30) Priorität: 10.11.2000 DE 10055946
(71) Anmelder: FILTERWERK MANN+HUMMEL GMBH, 71638 Ludwigsburg (DE)
(72) Erfinder: Fischer, Helmuth, 71686 Remseck (DE); Wild, Stephan, Dr., 75305 Neuenbürg (DE)
(74) Vertreter: Voth, Gerhard, Dipl.-Ing.

(57) **Zusammenfassung**

Die Erfindung betrifft ein Brennkraftmaschinensystem zum Zuführen von abgeschiedenem Wasser in eine Brennkraftmaschine 10. Das Wasser wird in einem Kraftstofffilter 19, insbesondere einem Dieselkraftstofffilter, abgeschieden und in einem Wasserspeicher 22 gesammelt. Das gesammelte Wasser wird über eine Verbindungsleitung 24, welche den Wasserspeicher 22 mit der Brennkraftmaschine 10 verbindet, in die Brennkraftmaschine eingebracht. Hierbei kann das Wasser dem zurückgeführten Abgas oder direkt der Brennkraftmaschine zugeführt werden.

## Beschreibung

### Stand der Technik

Die Erfindung betrifft ein Brennkraftmaschinensystem nach dem Oberbegriff des Patentanspruches 1. Außerdem betrifft die Erfindung ein Verfahren zur Betreibung des o.g. Brennkraftmaschinensystems.

Es ist aus der DE 44 09 570 ein Verfahren sowie eine Vorrichtung zum Entsorgen von Wasser aus einer Kraftstoffanlage bekannt. Diese Vorrichtung weist eine Brennkraftmaschine, insbesondere einen Dieselmotor auf, welche mit der Kraftstoffanlage verbunden ist. Weiterhin ist ein Ansaugsystem mit der Brennkraftmaschine verbunden, durch welches der Brennkraftmaschine angesaugte Verbrennungsluft zugeführt wird. In der Kraftstoffanlage ist eine Abscheidevorrichtung angeordnet, die Wasser, welches in dem Kraftstoff enthalten ist, abscheidet. Das abgeschiedene Wasser wird in einem Wasserspeicher gesammelt und bei bestimmten Betriebszuständen über das Ansaugsystem der Brennkraftmaschine zugeführt. Zur Erfassung der Betriebszustände, sowie der Steuerung der Wassereinleitung kann die Motorsteuerung genutzt werden. Bei kritischen Zuständen, wie z.B. beim Anfahrzustand, darf kein Wasser in die Brennkraftmaschine eingeleitet werden.

Die Ansaugluft für eine Brennkraftmaschine weist im allgemeinen Umgebungstemperatur auf, teilweise wird die Ansaugluft zusätzlich noch gekühlt, wodurch auch fein zerstäubte Wassertropfen sich in dem Ansaugsystem anlagern und größere Tropfen bilden. Diese Tropfen können sich in dem Ansaugsystem ansammeln, wodurch dann flüssiges Wasser in die Brennkraftmaschine gelangen kann. Dies führt, durch den großen Temperaturunterschied zwischen dem Wasser und der Brennkraftmaschine, jedoch beim Einspritzvorgang zu einer großen Belastung für die Brennkraftmaschine.

Aufgabe der Erfindung ist die Schaffung eines Brennkraftmaschinensystems, welches zuverlässig von dem Kraftstoff abgeschiedenes Wasser der Brennkraftmaschine zuführt, und große Belastungen für die Brennkraftmaschine verhindert. Die Aufgabe wird durch die Merkmale des Patentanspruches 1 gelöst.

### Vorteile der Erfindung

Das erfindungsgemäße Brennkraftmaschinensystem ist in vorteilhafter Weise geeignet, einer Brennkraftmaschine Wasser zuzuführen, wobei die Brennkraftmaschine keinen zu großen Belastungen ausgesetzt ist. Hierzu weist das Brennkraftmaschinensystem neben der Brennkraftmaschine ein Ansaugsystem, eine Abgasleitung, ein Kraftstoffsystem und einen Wasserspeicher auf. Die Brennkraftmaschine ist bei einer vorteilhaften Ausgestaltung der Erfindung zur Verbrennung von Dieselkraftstoff geeignet.

Das Ansaugsystem verfügt zumindest über einen Lufteinlass und einen Luftauslass, wobei der Luftauslass des Ansaugsystems mit der Brennkraftmaschine einlassseitig verbunden ist. Der Lufteinlass kann bei einer Ausgestaltung der Erfindung durch ein Luftftilterelement dichtend von dem Luftauslass getrennt sein kann, wodurch die angesaugte Luft gereinigt wird. Desweiteren können weitere Bauteile, wie z.B. eine Drosselklappe zwischen, dem Lufteinlass und dem Luftauslass angeordnet sein. Der Luftauslass kann bei besonderen Ausführungsformen als Ansaugluftverteiler mit mehreren Saugkanälen, wobei für jeden Zylinder der Brennkraftmaschine ein eigener Saugkanal vorgesehen ist, ausgeführt sein. Die Abgasleitung ist abgasseitig mit der Brennkraftmaschine verbunden, wodurch das Abgas, welches bei der Verbrennung von Luft und Kraftstoff in der Brennkraftmaschine entsteht, abgeführt wird. Der Kraftstoff, insbesondere Dieselkraftstoff, wird durch das Kraftstoffsystem der Brennkraftmaschine zugeführt. Das Kraftstoffsystem verfügt über einen Kraftstofffilter, welcher einerseits mit einem Kraftstofftank und andererseits über eine Kraftstoffleitung mit der Brennkraftmaschine verbunden ist. Der Kraftstofffilter reinigt den Kraftstoff, bevor dieser zu der Brennkraftmaschine geleitet wird. Beim Durchtreten des Kraftstoffes durch den Kraftstofffilter scheidet sich Wasser, welches im Kraftstoff enthalten ist, ab. Bei anderen Ausführungen kann ein separater Wasserabscheider in dem Kraftstoffsystem, insbesondere vor dem Kraftstofffilter angeordnet sein, wodurch nur entwässerter Kraftstoff zu dem Kraftstofffilter gelangt. Da Wasser schwerer ist als Kraftstoff, setzt sich das Wasser nach unten ab und der Kraftstoff steigt nach oben. Der gereinigte, entwässerte Kraftstoff wird der Brennkraftmaschine zugeführt. Das abgeschiedene Wasser wird in einen Wasserspeicher geleitet, welcher korrespondierend mit dem Kraftstofffilter verbunden ist. Hierbei kann der Wasserspeicher z.B. über eine Leitung mit dem Kraftstofffilter oder dem Wasserabscheider verbunden sein. Bei einer anderen Ausgestaltung ist der Wasserspeicher in einem Bodenbereich in den Kraftstofffilter integriert, wodurch ein Bauteil eingespart werden kann. Der Wasserspeicher ist mit einer Verbindungsleitung einlassseitig, d.h. vor der Verbrennung, korrespondierend mit der Brennkraftmaschine verbunden. Hierbei können diverse Bauteile zwischen der Brennkraftmaschine und dem Wasserspeicher angeordnet sein. Damit das abgeschiedene Wasser nicht unkontrolliert ablaufen kann, ist ein Verschlusselement vorgesehen, welches den Wasserspeicher dichtend von der Brennkraftmaschine trennen kann. Dieses Verschlusselement kann sowohl in der Verbindungsleitung, als auch an dem Wasserspeicher angeordnet sein. Das Verschlusselement kann z.B. als Ventil oder als Schieber ausgebildet sein. Zur Steuerung des Verschlusselementes, wobei auch Regelungen inbegriffen sind, ist ein Wassersensor vorgesehen, welcher zur Ermittlung des im Kraftstofffilter abgeschiedenen Wassers dient. Dieser Wassersensor ist korrespondierend mit dem Verschlusselement verbunden und kann an beliebigen Stellen zwischen dem Kraftstofffilter und dem Verschlusselement angeordnet sein. Hierbei ist eine Anordnordnung des Wassersensors in der Verbindungsleitung oder dem Wasserspeicher vorteilhaft.

Das im Kraftstofffilter abgeschiedene Wasser enthält noch geringe Anteile an Kraftstoff, weshalb eine Entsorgung des Wasser in die Umwelt aus ökologischen Gründen nicht erfolgen darf. Die Verbrennung des mit Kraftstoff kontaminierten Wassers ist in zweifacher Hinsicht vorteilhaft. Einerseits verbrennen die im Wasser enthaltenen Kraftstoffanteile, wodurch das kraftstoffhaltige Wasser nicht teuer entsorgt werden muß und andererseits werden die in dem Abgas enthaltenen Schadstoffe verringert.

Die Einleitung des Wassers in die Brennkraftmaschine kann sowohl in flüssiger, als auch in gasförmiger Form erfolgen, wobei unterschiedliche Einbringungsvarianten denkbar sind.

Eine Variante zur Einbringung des Wassers in die Brennkraftmaschine ist die Einleitung des Wassers in eine Abgasrückführungseinheit. Hierbei ist der Wasserspeicher über die Verbindungsleitung mit der Abgasrückführungseinheit verbunden. Die Abgasrückführungseinheit verfügt über einen Abgaseinlass und einen Abgasauslass, wobei der Abgaseinlass mit der Abgasleitung verbunden ist. Der Abgasauslass ist einlassseitig mit der Brennkraftmaschine verbunden. Das Abgas, welches von einer Brennkraftmaschine ausgestoßen wird, weist eine Temperatur von mehr als 100°C auf. Bekanntlich liegt der Siedepunkt von Wasser im Bereich des Umgebungsdrucks bei ca. 100°C. Somit verdampft bzw. verdunstet das, durch die Verbindungsleitung in die Abgasrückführungseinheit eingeleitete Wasser auch dann, wenn das Abgas in der Abgasrückführung zum Teil gekühlt wird. In der Abgasrückführungseinheit wird ein Teil der Abgase der Brennkraftmaschine erneut zugeführt, wobei der zurückgeführte Teil des Abgases mit dem eingeleiteten Wasser und der Ansaugluft vermischt in die Brennkraftmaschine eingeleitet wird. Somit werden die im verdampften Wasser möglicherweise noch enthaltenen Kraftstoffreste verbrannt.

Eine alternative Variante der Erfindung weist ein Einlassventil auf, welches mit einer, in der Brennkraftmaschine angeordneten Brennkammer verbunden ist. Dieses Einlassventil ist mit der Verbindungsleitung verbunden, wodurch das in dem Kraftstofffilter abgeschiedene Wasser direkt in die Brennkammer geleitet wird. Hierbei kann das Wasser vorzugsweise während des Einlasstaktes eingeleitet werden, da in dieser Phase der in der Brennkammer herrschende Druck am geringsten ist. Sofern das Wasser in flüssiger Form in die Brennkammer eingebracht ist, verbleibt ausreichend Zeit bis zur Zündung, um das Wasser zu verdampfen. Wenn das Wasser während der Kompression in die Brennkammer eingespritzt wird, so muß der Einspritzdruck größer als der in der Brennkammer herrschende Druck sein. Durch eine direkte Einspritzung des Wassers in die Brennkammer kann die Wassermenge, welche bei einem Verbrennungsvorgang mitverbrannt wird, exakt dosiert werden.

Gemäß einer vorteilhaften Ausbildung der Erfindung weist die Verbindungsleitung an dem, dem Wasserspeicher gegenüberliegenden Ende einen Ejektor auf. Durch einen Ejektor kann das Wasser, bzw der Wasserdampf fein verteilt in das der Brennkraftmaschine zugefühhrt Abgas, bzw. die Brennkammer eingebracht werden. Einerseits verteilt sich dadurch der Wasserdampf besser und andererseits kann das eingedüste Wasser durch die vergrößerte Oberfläche besser verdunsten bzw. verdampfen. Bei besonderen Ausführungen kann der Ejektor als Venturidüse ausgebildet sein, wobei das Wasser durch die Sogwirkung des Abgases bzw. durch den in der Brennkammer herrschenden Unterdruck in die Brennkammer gesaugt wird.

Eine vorteilhafte Ausbildung der Erfindung weist in der Verbindungsleitung ein weiteres Verschlusselement auf. Dieses zusätzliche Verschlusselement kann als Schleusenventil genutzt werden, wodurch das Wasser zwischen dem ersten Verschlusselement und dem zusätzlichen Verschlusselement eingeschlossen sein kann. Diese Schleuse kann z.B. zum Verdunsten des Wassers genutzt werden, wodurch sich ein höherer Druck in der Verbindungsleitung aufbaut. Durch den höheren Druck kann der Wasserdampf ohne zusätzliche Fördermittel, wie z.B. Pumpen, in das Abgasrückführungssystem eingeleitet werden. Die Schleuse kann aber auch verhindern, dass, bei einem niedrigen Druck im Kraftstoffsystem und einem höheren Druck in dem Abgasrückführungssystem, Abgas in das Kraftstoffsystem gelangt.

Gemäß einer weiteren Ausgestaltung der Erfindung ist in der Verbindungsleitung ein zweiter Wassersensor angeordnet, wobei dieser zweite Wassersensor mit dem ersten und dem zusätzlich in der Verbindungsleitung angeordneten Verbindungselement verbunden ist, damit die Verschlusselemente mit einem zusätzlichen Signal geöffnet oder geschlossen werden können. Der zweite Wassersensor kann z.B. als Zustandserkennungssensor oder als Sicherheitssensor ausgebildet sein. Bei einem Zustandserkennungssensor erfasst der Wassersensor, ob das Wasser in der Verbindungsleitung bereits gasförmig, oder noch im flüssigen Zustand vorliegt. Entsprechend von vorab zu definierenden Bedingungen darf das zweite Verschlusselement bei einer Vorgabevariante erst dann öffnen, wenn das ganze Wasser gasförmig ist. Bei einer anderen Vorgabevariante darf das zweite Verschlusselement bereits Wasser in flüssiger Form in das Abgasrückführungssystem bzw. die Brennkammer einleiten. Ist der zweite Wassersensor als Sicherheitssensor ausgebildet, so kann er zur Erkennung von Kraftstoff vorgesehen sein. Bei entsprechenden Vorgaben kann der Wassersensor, beim Überschreiten eines maximalen Kraftstoffgehaltes im Wasser das Verschließen des ersten Verschlusselementes und das Geschlossenbleiben des zweiten Verschlusselementes bewirken. Somit kann verhindert werden, dass Kraftstoff über die Verbindungsleitung in das Abgasrückführungssystem bzw. die Brennkammer eingeleitet wird.

Es ist vorteilhaft, dass die Verbindungsleitung teilweise mit einem Wärmeübertrager zur Aufheizung des Wassers versehen ist. Dadurch kann eine Wärmeübertragung von einem vorhandenen heißen Fluid, wie z.B. Motoröl, Kühlwasser oder Abgas, auf das Wasser erfolgen, wodurch eine zusätzliche Heizung zum Erwärmen des Wassers entfallen kann. Durch diese Wärmeübertragung wird das Wasser z.B. bis zur Siedetemperatur erwärmt, wodurch sich der Zustand von flüssig in gasförmig ändert. Je heißer das Fluid ist, desto schneller verdampft das Wasser. Bei einer besonderen Ausgestaltung der Erfindung weist die Verbindungsleitung zumindest teilweise zwei Strömungsquerschnitte auf. In einem Strömungsquerschnitt befindet sich das Wasser und in dem anderen Strömungsquerschnitt strömt das heiße Fluid. Die beiden Strömungsquerschnitte können im Gleichstromprinzip, Gegenstromprinzip oder im Kreuzstrom durchströmt werden. Ist das heiße Fluid das Abgas, so kann die Verbindungsleitung in einem Endbereich eine Durchtrittsöffnung für das Wasser in das Abgas aufweisen.

Gemäß einer vorteilhaften Ausgestaltung der Erfindung ist die Verbindungsleitung mit einem Druckerzeugungssystem verbunden. Dieses Druckerzeugungssystem kann z.B. durch ein Pumpe gebildet sein. Bei anderen Ausbildungen kann das Druckerzeugungssystem über Druckluft verfügen, welche das Wasser, bzw. den Wasserdampf in das Abgasrückführungssystem oder die Brennkammer hineindrückt. Sobald das Druckerzeugungssystem den Druck in der Verbindungsleitung über den in dem Kraftstoffsystem herrschenden Druck erhöht, muss das erste Verschlusselement geschlossen sein, damit das Wasser nicht in das Kraftstoffsystem gedrückt wird.

Ein Verfahren zum Zuführen von Wasser in eine Brennkraftmaschine eines Brennkraftmaschinensystems der beschriebenen Art, erfasst mit einem Wassersensor einen Wasserpegel in einem Wasserspeicher. In dem Wasserspeicher wird Wasser, welches aus dem Kraftstoff eines Kraftstoffsystems abgeschieden wurde, gesammelt. Hierzu ist der Wasserspeicher mit dem Kraftstoffsystem verbunden. Sobald das abgeschiedene Wasser einen definierten Wasserpegel überschreitet, erfasst dies der Wassersensor und sendet ein Signal an ein Verschlusselement. Das Verschlusselement ist derart an dem Wasserspeicher oder einer Verbindungleitung zwischen dem Wasserspeicher und der Brennkraftmaschine angeordnet, dass der Wasserspeicher dichtend von der Brennkraftmaschine trennbar ist. Sobald das Signal des Wassersensors zum Öffnen des Verschlusselementes umgesetzt ist, wird das Verschlusselement geöffnet und das Wasser kann aus dem Wasserspeicher in die Verbindungsleitung fließen. In der Verbindungsleitung wird das Wasser dann verdunstet und anschließend in die Abgasrückführungseinheit oder die Brennkammer eingeleitet. Sobald der Wasserpegel einen Mindestwasserstand unterschreitet, sendet der Sensor ein Signal aus, wodurch das Veschlußelement die Verbindungsleitung wieder verschließt.

Gemäß einer Weiterbildung des Verfahrens wird das Wasser nur bei vorgegebenen Betriebszuständen der Brennkraftmaschine, welche von Sensoren in Verbindung mit einer Auswertungseinheit erfasst werden, zugeführt. Es ist für die Lebensdauer einer Brennkraftmaschine vorteilhaft, wenn das Wasser nur bei Betriebstemperatur eingeleitet wird, da somit das Wasser nicht kondensieren kann. Weiterhin sollte der Lastzustand und die Drehzahl als Steuergröße verarbeitet werden. Sobald sich die Brennkraftmaschine in einem definierten Betriebszustand, z.B. Teillast im mittleren Drehzahlbereich, befindet, in welchem Wasser zugeführt werden darf und der Wassersensor eine ausreichende Wassermenge erkennt, wird das Verschlusselement geöffnet und das Wasser kann von dem Wasserspeicher in die Verbindungsleitung fließen. Sobald entweder der Wasserpegel unter den vorgegebenen Mindestwasserpegel sinkt, oder die Brennkraftmaschine sich außerhalb der definierten Betriebszustände befindet, wird das Verschlusselement geschlossen, wodurch das Wasser weitergesammelt wird bis es der Brennkraftmaschine zugeführt werden darf.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigt
- Figur 1: ein Brennkraftmaschinensystem in schematischer Darstellung,
- Figur 2: ein Brennkraftmaschinensystem in schematischer Darstellung in einer Variante,
- Figur 3: einen Ausschnitt aus einer Verbindungsleitung,
- Figur 4: einen Ejektor im Schnitt und
- Figur 5: einen Ausschnitt aus einer Brennkraftmaschine im Schnitt.

### Beschreibung der Ausführungsbeispiele

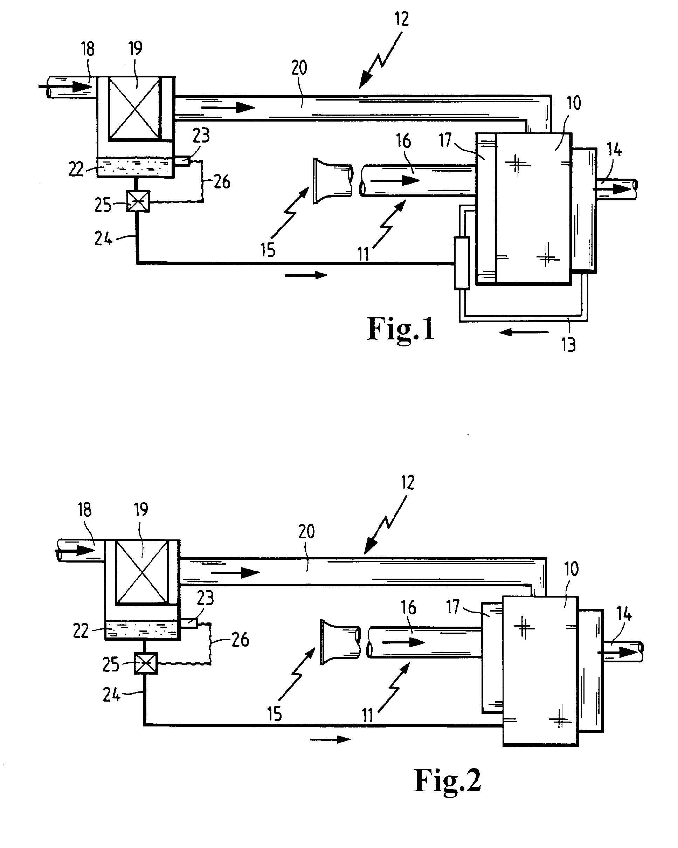

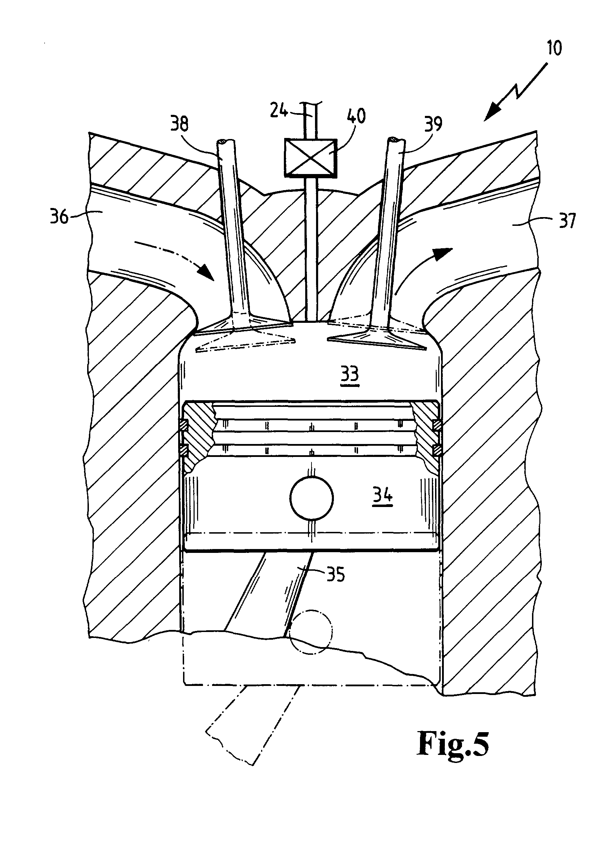

In Figur 1 ist ein Brennkraftmaschinensystem in schematischer Darstellung abgebildet. Das Brennkraftmaschinensystem weist eine Brennkraftmaschine 10, ein Ansaugsystem 11, ein Kraftstoffsystem 12, eine Abgasrückführungseinheit 13 und eine Abgasleitung 14 auf. Das Ansaugsystem 11 verfügt über einen Lufteinlass 15, welcher an einer zur Luftansaugung vorteilhaten Stelle angeordnet ist. Bei einem Kraftfahrzeug (nicht dargestellt) ist eine solche Stelle z.B. im Frontbereich des Fahrzeugs angeordnet. Der Lufteinlass 15 schließt an eine Luftleitung 16 an. In der Luftleitung 16 wird die Luft in Richtung Brennkraftmaschine 10 geleitet, wobei in der Luftleitung 16 diverse Bauteile wie z.B. ein Luftlilter (nicht dargestellt) angeordnet sein können. Die Luftleitung 16 mündet in einen Ansaugluftverteiler 17, welcher über mehrere Luftauslässe (nicht dargestellt) verfügt. Jede Brennkammer (gemäß Figur 5) ist mit einem Luftauslass verbunden.

Das Kraftstoffsystem 12 verfügt über eine Tankleitung 18, welche einerseits mit einem Kraftstofftank (nicht dargestellt) und andererseits mit einem Kraftstofffilter 19 verbunden ist. In der Tankleitung 18 kann eine Kraftstoffförderpumpe (nicht dargestellt) angeordnet sein, welche den Kraftstoff von dem Kraftstofftank in Richtung der Brennkraftmaschine 10 fördert. An den Kraftstofffilter 19 schließt eine Kraftstoffleitung 20 an, welche an dem, dem Kraftstofffilter 19 gegenüberliegenden Ende mit der Brennkraftmaschine 10 verbunden ist. Die Kraftstoffleitung 20 ist durch den Kraftstofffilter 19 dichtend von der Tankleitung 18 getrennt, wodurch nur gereinigter Kraftstoff der Brennkraftmaschine 10 zugeführt wird.

Die Abgasrückführungseinheit 13 ist einerseits mit der Abgasleitung 14 und andererseits mit dem Ansaugluftverteiler 17 verbunden. Dadurch kann das, von der Brennkraftmaschine 10 ausgestoßene Abgas teilweise über den Ansaugluftverteiler 17 erneut der Brennkraftmaschine 10 zur Verbrennung zugeführt werden.

In dem Kraftstofffilter 19 wird das im Kraftstoff enthaltene Wasser zu einem Großteil abgeschieden. Ein minimaler Wasserrest verbleibt im Kraftstoff, wodurch jedoch keine Beeinträchtigung oder Beschädigung der Brennkraftmaschine 10 bzw. deren Bauteile wie z.B. der Einspritzdüse (nicht dargestellt) verursacht wird. Das durch den Kraftstofffilter 19 abgeschiedene Wasser wird in einem Wasserspeicher 22, welcher direkt mit dem Kraftstofffilter 19 verbunden ist, gesammelt. In dem Wasserspeicher 22 ist ein Wassersensor 23 angeordnet, welcher den Wasserfüllstand des gespeicherten Wassers erfasst. In einem Bodenbereich des Wasserspeichers 22 ist eine Verbindungsleitung 24 angeordnet. Diese Verbindungsleitung 24 verläuft von dem Wasserspeicher 22 bis zu der Abgasrückführungseinheit 13, wo das Wasser in das Abgas eingeleitet wird. Um die Wassereinleitung zu kontrollieren, ist ein Verschlusselement 25 in der Verbindungsleitung 24 angeordnet. Das Verschlusselement 25 ist über eine Steuerleitung 26 mit dem Wassersensor 23 verbunden. Sobald der Wassersensor 23 einen Wasserpegel erfasst, welcher über einem Maximalwasserpegel liegt, sendet er ein Signal aus, durch welches das Verschlusselement 25 die Verbindungsleitung 24 öffnet. Der Maximalwasserpegel ist derart definiert, dass kein Wasser in die Kraftstoffleitung 20 gelangen kann. Das von dem Wassersensor ausgegebene Signal kann bei anderen Ausgestaltungen durch einen Signalverstärker (nicht dargestellt) derart verstärkt werden, dass das Signal selbst zum Öffnen des Verschlusselementes 25 genutzt wird. Bei anderen Ausgestaltungen ist ein zusätzliches Bewegungselement zum Öffnen oder Schließen des Verschlusselementes 25 vorgesehen. Sobald der Wasserpegel unter einen Minimalwasserpegel sinkt, sendet der Wassersensor 23 ein Signal zum Verschließen der Verbindungsleitung 24 aus. Der Mindestwasserpegel ist derart definiert, dass kein Kraftstoff in die Verbindungsleitung 24 eintreten kann.

In Figur 2 ist ein Brennkraftmschinensystem in schematischer Darstellung in einer Variante dargestellt. Der Figur 1 entsprechende Bauteile sind mit gleichen Bezugszeichen versehen. Bei diesem Ausführungsbeispiel ist die Verbindungsleitung 24 direkt mit der Brennkraftmaschine 10 verbunden, wodurch das abgeschiedene Wasser in eine Brennkammer gemäß Figur 5 eingeleitet werden kann. Zur Verteilung des Wassers auf die einzelnen Brennkammern gemäß Figur 5 ist ein Leitungssystem (nicht dargestellt) vorgesehen.

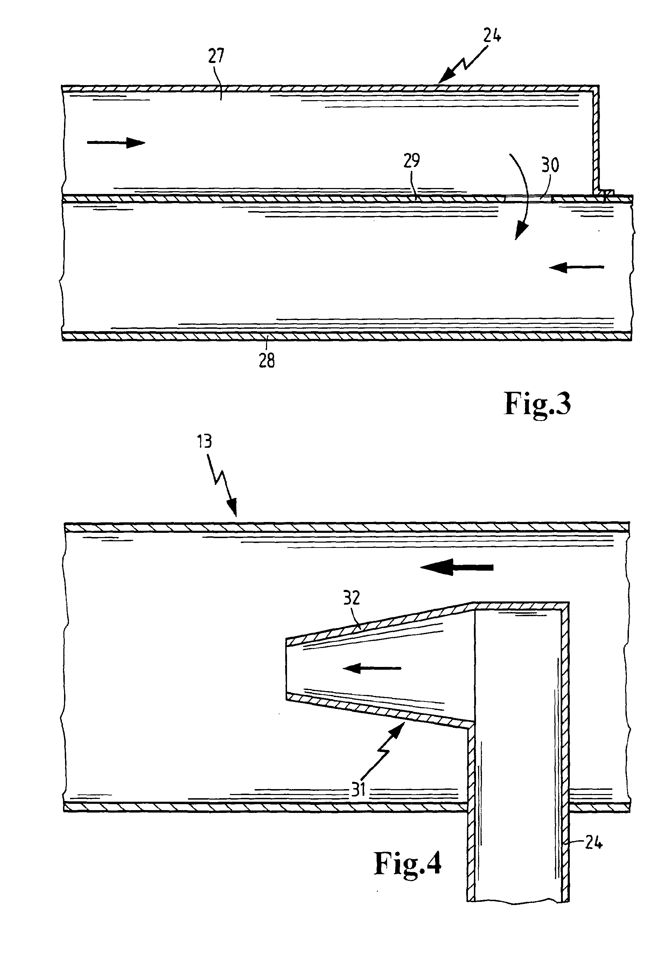

In Figur 3 ist ein Ausschnitt aus der Verbindungleitung 24 im Schnitt dargestellt. Bei diesem Ausführungsbeispiel weist die Verbindundungsleitung 24 einen Wasserkanal 27 und einen Abgaskanal 28 auf. Der Wasserkanal 27 verläuft in einem Teilbereich parallel zu dem Abgaskanal 28. Die beiden Kanäle 27, 28 können einen beliebigen Querschnitt aufweisen und werden durch eine Zwischenwand 29 dichtend voneinander getrennt. Die Zwischenwand 29 besteht aus einem Werkstoff wie z.B. Aluminium, welcher gute thermische Leiteigenschaften, aufweist. Da das Abgas eine wesentlich höhere Temperatur als das Wasser aufweist, wird das Wasser in dem Wasserkanal 27 durch die von dem Abgas abgestrahlte Wärme erwärmt, wobei die Erwärmung des Wassers zur Verdunstung bzw. Verdampfung führen kann. Im Endbereich der Verbindungsleitung 24 weist die Zwischenwand 29 eine Öffnung 30 auf, durch welche das Wasser aus dem Wasserkanal 27 in das Abgas des Abgaskanals 28 strömen kann. Die beiden Kanäle 27, 28 sind gegenläufig durchströmt, wodurch das erwärmte Wasser durch die Öffnung 30 in das heißere Abgas eintreten kann. Dadurch werden noch die letzten nichtverdampften Wassertropfen verdunstet, wodurch der Brennkraftmaschine 10 gemäß Figur 1 nur gasförmiges Wasser, welches mit dem Abgas vermischt ist, zugeführt wird. Bei anderen Ausführungsbeispielen trennt die Zwischenwand 29 die beiden Kanäle an jeder Stelle dichtend voneinander, wodurch in dem Abgaskanal 28 auch ein anderes heißes Fluid strömen könnte, welches nicht in direkten Kontakt zu dem Wasser gelangen darf. Hierbei müßte dann das Wasser über ein Anschlussstück (nicht dargestellt) in die Abgasleitung bzw. direkt in eine Brennkammer (nicht dargestellt) eingeleitet werden.

In Figur 4 ist ein Ejektor 31 im Schnitt dargestellt. DerEjektor 31 ist an dem, dem Wasserspeicher 22 gemäß Figur 1 gegenüberliegenden Ende der Verbindungsleitung 24 angeordnet. Außerdem ist der Ejektor 31 von einem Teil der Abgasrückführungseinheit 13 umschlossen. Das in der Abgasrückführungseinheit 13 strömende Gas umströmt den Ejektor 31, welcher einen, in Strömungsrichtung sich verjüngenden hohlen Kegelstumpf 32 aufweist. Durch das an dem Kegelstumpf 32 vorbeiströmende Abgas wird ein Sog erzeugt, welcher das gasförmige Wasser aus der Verbindungsleitung 24 heraus saugt. Zur Unterstützung der Sogwirkung kann das Wasser auch noch durch ein Druckerzeugungssystem (nicht dargestellt) aus der Verbindungsleitung 24 herausgedrückt werden.

In Figur 5 ist ein Ausschnitt aus einer Brennkraftmaschine 10 gemäß Figur 2, im Schnitt durch eine Brennkammer 33 dargestellt. In der Brennkammer 33 ist ein Kolben 34 angeordnet, an welchen ein Pleuel 35 anschließt. Die Brennkammer 33 weist einen Einlass 36 und einen Auslass 37 auf. Der Einlass 36 ist durch ein Einlassventil 38 und der Auslass 37 durch ein Auslassventil 39 verschließbar.

Im Auslasstakt ist das Einlassventil 38 geschlossen und das Auslassventil 39 geöffnet, wodurch das, bei der Verbrennung entstandene Abgas über den Auslass 37 zu der Abgasleitung 14 gemäß Figur 2 geleitet wird.

Im Einlasstakt (strichpunktiert dargestellt) ist das Einlassventil 38 geöffnet, das Auslassventil 39 geschlossen und der Kolben 34 in einer unteren Stellung angeordnet. In diesem Zustand kann Wasser bzw. Wasserdampf aus der Verbindungsleitung 24 durch ein Einspritzventil 40 in die Brennkammer 33 eingespritzt werden. Das Einspritzventil 40 schließt nach dem Wassereinspritzen wieder, damit in dem Komressionstakt der Brennkraftmaschine 10 kein Gas oder Kraftstoff in die Verbindungsleitung 24 eintreten kann. Sofern das Wasser während der Kompression in die Brennkammer 33 eingespritzt werden soll, so ist ein Druckerzeugungssystem (nicht dargestellt) vorzusehen, welches einen größeren Druck erzeugen kann, als in der Brennkammer 33 herrscht.

## Patentansprüche

1. Brennkraftmaschinensystem, insbesondere für ein Kraftfahrzeug, aufweisend zumindest eine Brennkraftmaschine (10), insbesondere für Dieselkraftstoff, ein Ansaugsystem (11), eine Abgasleitung (14), ein Kraftstoffsystem (12), einen Wasserspeicher (22) einen Wassersensor (23) und ein Verschlusselement (25),
- wobei das Ansaugsystem (11) über einen Lufteinlass (15) und einen Luftauslass verfügt, und der Luftauslass mit der Brennkraftmaschine (10) verbunden ist,
- wobei die Abgasleitung (14) mit der Brennkraftmaschine (10) abgasseitig verbunden ist,
- wobei das Kraftstoffsystem (12) über einen Kraftstofffilter (19) verfügt, welcher über eine Kraftstoffleitung (20) mit der Brennkraftmaschine (10) verbunden ist,
- wobei der Wasserspeicher (22) mit einer Verbindungsleitung (24) einlassseitig korrespondierend mit der Brennkraftmaschine (10) verbunden ist und durch das Verschlusselement (25) dichtend von der Brennkraftmaschine (10) trennbar ist,
- wobei der Wasserspeicher (22) korrespondierend mit dem Kraftstoffsystem (12), insbesondere dem Kraftstofffilter (19), verbunden ist, wodurch in dem Kraftstoffsystem (12), insbesondere durch den Kraftstofffilter (19), abgeschiedenes Wasser der Brennkraftmaschine (10) zuführbar ist,
- wobei das Verschlusselement (25) mit dem Wassersensor (23), welcher zur Ermittlung des abgeschiedenen Wassers vorgesehen ist, korrespondierend verbunden ist,
**dadurch gekennzeichnet, dass** die Verbindungsleitung (24) mit einer Abgasrückführungseinheit (13) verbunden ist, wobei die Abgasrückführungseinheit (13) über einen Abgaseinlass und einen Abgasauslass verfügt, wobei der Abgaseinlass mit der Abgasleitung (14) verbunden ist, und der Abgasauslass einlassseitig mit der Brennkraftmaschine (10) verbunden ist.

2. Brennkraftmaschinensystem, insbesondere für ein Kraftfahrzeug, aufweisend zumindest eine Brennkraftmaschine (10), insbesondere für Dieselkraftstoff, ein Ansaugsystem (11), eine Abgasleitung (14), ein Kraftstoffsystem (12), einen Wasserspeicher (22) einen Wassersensor (23) und ein Verschlusselement (25),
- wobei das Ansaugsystem (11) über einen Lufteinlass (15) und einen Luftauslass verfügt, und der Luftauslass mit der Brennkraftmaschine (10) verbunden ist,
- wobei die Abgasleitung (14) mit der Brennkraftmaschine (10) abgasseitig verbunden ist,
- wobei das Kraftstoffsystem (12) über einen Kraftstofffilter (19) verfügt, welcher über eine Kraftstoffleitung (20) mit der Brennkraftmaschine (10) verbunden ist,
- wobei der Wasserspeicher (22) mit einer Verbindungsleitung (24) einlassseitig korrespondierend mit der Brennkraftmaschine (10) verbunden ist und durch das Verschlusselement (25) dichtend von der Brennkraftmaschine (10) trennbar ist,
- wobei der Wasserspeicher (22) korrespondierend mit dem Kraftstoffsystem (12), insbesondere dem Kraftstofffilter (19), verbunden ist, wodurch in dem Kraftstoffsystem (12), insbesondere durch den Kraftstofffilter (19), abgeschiedenes Wasser der Brennkraftmaschine (10) zuführbar ist,
- wobei das Verschlusselement (25) mit dem Wassersensor (23), welcher zur Ermittlung des abgeschiedenen Wassers vorgesehen ist, korrespondierend verbunden ist,
**dadurch gekennzeichnet, dass** die Verbindungsleitung (24) über ein Einspritzventil (40) mit einer, in der Brennkraftmaschine (10) angeordneten, Brennkammer (33) verbunden ist.

3. Brennkraftmaschinensysten nach Anspruch 1 oder 2, **dadurch gekennzeichnet, dass** die Verbindungsleitung (24) an dem, dem Wasserspeicher (22) gegenüberliegenden Ende mit einem Ejektor (31) verbunden ist.

4. Brennkraftmaschinensystem nach einem der vorangehenden Ansprüche, **dadurch gekennzeichnet, dass** in der Verbindungsleitung (24) ein weiteres Verschlusselement (25) angeordnet ist.

5. Brennkraftmaschinensystem nach einem der vorangehenden Ansprüche, **dadurch gekennzeichnet, dass** in der Verbindungsleitung (24) ein zweiter Wassersensor (23) angeordnet ist.

6. Brennkraftmaschinensystem nach einem der vorangehenden Ansprüche, **dadurch gekennzeichnet, dass** die Verbindungsleitung (24) teilweise mit einem Wärmeübertrager zur Aufheizung des Wassers versehen ist.

7. Brennkraftmaschinensystem nach einem der vorangehenden Ansprüche, **dadurch gekennzeichnet, dass** die Verbindungsleitung (24) mit einem Druckerzeugungssystem verbunden ist.

8. Verfahren zum Zuführen von Wasser in eine Brennkraftmaschine (10) eines Brennkraftmaschinensystems nach einem der vorangehenden Ansprüche, **dadurch gekennzeichnet, dass** in dem Kraftstofffilter (19) abgeschiedenes Wasser in dem Wasserspeicher (22) gesammelt und über die Verbindungsleitung (24) der Brennkraftmaschine (10) zugeführt wird, wobei der Wassersensor (23) ein Signal an das, in der Verbindungsleitung (24) angeordnete Verschlusselement (25) aussendet, wodurch nur bei vorhandenem Wasser das Verschlusselement (25) geöffnet wird.

9. Verfahren zum Zuführen von Wasser in eine Brennkraftmaschine (10) eines Brennkraftmaschinensystems nach Anspruch 8, **dadurch gekennzeichnet, dass** das Wasser nur bei vorgegebenen Betriebszuständen der Brennkraftmaschine (10), welche von Sensoren in Verbindung mit einer Auswertungseinheit erfasst werden, zugeführt wird.
